Europäisches Patentamt

**European Patent Office**

Office européen des brevets

(19)

(11) Publication number: **0 273 491**
**B1**

(12) **EUROPEAN PATENT SPECIFICATION**

(45) Date of publication of the patent specification:
07.11.90

(51) Int. Cl.⁵: **A01G 9/12**

(21) Application number: **87202344.5**

(22) Date of filing: **26.11.87**

(54) Device for supporting a plant.

(30) Priority: **28.11.86 NL 8603039**

(43) Date of publication of application:
**06.07.88 Bulletin 88/27**

(45) Publication of the grant of the patent:
**07.11.90 Bulletin 90/45**

(84) Designated Contracting States:
**AT BE CH DE ES FR GB GR IT LI LU NL SE**

(56) References cited:
**EP-A- 0 001 703**
**DE-C- 624 326**
**FR-A- 2 428 969**

(73) Proprietor: **Delisse, Willem Jozef, Groothees 11,
NL-5469 ST Erp(NL)**

(72) Inventor: **Delisse, Willem Jozef, Groothees 11,
NL-5469 ST Erp(NL)**

(74) Representative: **Noz, Franciscus Xaverius, Ir. et al,
Algemeen Octrooibureau P.O. Box 645, NL-5600 AP
Eindhoven(NL)**

## Description

The invention relates to a device for supporting a plant by means of a string attached to the device, whereby the device is provided with a supporting part by which the device can be coupled to a horizontally extending wire, such that the device can be moved along the wire, whilst the device also comprises a first roll rotatable relative to the supporting part about an axis of rotation having a fixed position relative to the supporting part, and means for fixing the string relative to the supporting part.

Such a device, which is e.g. used to supporting tomato plants, is known from the Dutch patent appliciation 8202226.

At first the part of the string along which the plant is to be trained up is tightened between the device and the ground, after which the growing plant can be trained up along the string. During the period that fruits of the plant are harvested fruits are regularly picked near the lower side of the plant and the part from which the fruits have been removed is laid on the ground, so that the higher part of the plant on which the fruits to be harvested later are forming will come closer to the ground. For said lowering and laying down the lower part of the plant at regular intervals the device is moved along the horizontally extending wire supporting the device, whilst at the same time the string supporting the plant is paid out.

In order to effect said paying out of the string the device known from the Dutch patent application 8202226 must be turned by hand through an angle of about 90° relative to the wire supporting the device. As such a wire is usually arranged at a distance of 3 metres or more above the ground surface it will be apparent that the device, in particular once the plants are grown, is difficult to reach, so that paying out the many tomato plants present in a glasshouse or the like will be a difficult and time-consuming activity.

The invention aims at obtaining a device of the above kind, whereby the operation of the device, in particular with regard to the paying out of a part a string supporting a plant, can be carried out more easily.

According to the invention this can be achieved because of the fact that the device is provided with a casting containing said means for fixing the string to the device, said means comprising the first roll and a second roll which is freely rotatable about an axis of rotation extending parallel to the axis of rotation of the first roll and which is also movable up-and-down in the casing between a first position in which, seen in the normal operating position of the device, the second roll is located at a distance from the first roll and lower than the axis of rotation of the roll and a second position, in which the second roll bears against a portion of the string located on the surface of the first roll and against a portion of the string located on the surface of a boundary wall of the casing, such that the second roll is locked against a further upward movement.

When using the device according to the invention the string may be passed between the two rolls, such that a pair of string parts hang down. The one part will thereby be led over the first roll, going down at the side of the first roll remote from the second roll, and be fixed in the ground in order to be used for training up and supporting a plant therealong. Under the influence of the weight of the plant and the frictional forces occurring between the rolls and the string the second roll will automatically be pulled up in order to grip the string tightly between the first and the second roll.

When it is necessary to pay out the string supporting the plant said string only needs to be displaced such that said part will lie at the side of the second roll remote from the first roll. As a result it will be possible for the second roll to go down and allow paying out of the part supporting the plant. When the part supporting the plant has been paid out sufficiently said part is taken back to its orginal position, i.e. at the side of the first roll remote from the second roll, as a result of which the string will automatically be gripped tightly between the two rolls again. Said displacement of the string supporting the plant between the various positions can easily be done from the ground, so that the operation can be carried out in a simple manner.

It is noted that from the Dutch patent appliciation 8002867 there is known a further device for supporting growing plants. Said device is mainly formed by a reel which is supported on the supporting wire. In one of the side plates of the reel there are provided holes for passing the string with a view to effecting a gripping action. Also here the reel will have to be adjusted by hand for paying out the string, so that the same problems occur here as with the construction according to the Dutch patent appliication 8202226.

The invention will be further explained hereinafter with reference to the accompanying figures which diagrammatically illustrate an embodiment of a device according to the invention.

Fig 1 is a view of an embodiment of a device according to the invention.

Fig 2 is a smaller-scale cross-section of the casing of the device illustrated in fig 1.

Fig 3 is a view of a combination of a casing with a string reel.

Fig 4 is a section of the reel.

Fig 5 is a top view of fig 4.

Fig 6 is a section of the casing.

Fig 7 is a top view of fig 6.

Fig 8 is a view, corresponding with fig 1, of a second embodiment of a device according to the invention.

Fig 9 is a side view of the device illustrated in fig 8.

Fig 10 is a view of a second embodiment of a combination of a casing and a string reel.

Fig 11 is a section of the reel illustrated in fig 10.

Fig 12 is a top view of fig 11.

Fig 13 is a section of the casing illustrated in fig 10.

Fig 14 is a bottom view of fig 13.

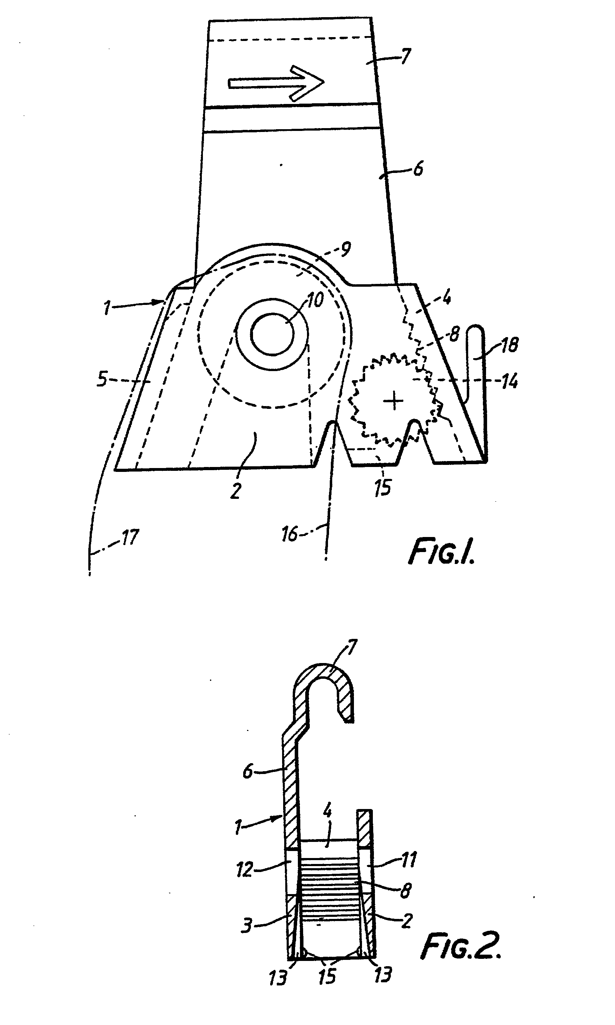

The casing 1 of the device illustrated in the figs 1 and 2 comprises a front wall 2, a rear wall 3 and side walls 4 and 5 connecting the front wall and the rear wall together. The rear wall 3 is provided with an upwardly extending extension piece 6, whose upper end is bent over for forming a hook-shaped part 7, by means of which the device can be suspended from a horizontally extending supporting wire.

As will furthermore be apparent, in particular from fig 1, the transverse walls 4 and 5 slope upwards from the bottom of the device in a direction towards each other.

The inner side of the supporting wall 4 has a knurled surface 8, obtained by providing a number of horizontal grooves, whose section is substantially triangular, in said surface.

Inside the casing there is furthermore located a roll 9. The roll 9 is supported freely rotatably about a horizontal axis of rotation by means of pins 10 integral with the roll, said pins being accommodated in bores 11 and 12 which are provided in the front wall and the rear wall respectively.

As appears in particular from fig 2 grooves 13, extending upwards from the bottom edges of the front and rear walls 2 and 3 and gradually decreasing in depth, are provided in the sides of said facing walls, through which grooves the projecting pins 10 of the wheel 9 can be moved upwards when the wheel is being mounted while simultaneously the relevant pins 10 are pressed together somewhat resiliently until they slip into the bores 11 and 12.

Between the front and rear walls 2 and 3 there is located a further roll 14, such that said roll 14 is freely rotatable about an axis of rotation extending parallel to the axis of rotation of the roll 9. Furthermore the roll 14 can freely move up-and-down in the casing. The downward movement of the roll 14 is limited by ribs or stops 15 fixed to the bottom edges of the walls 2 and 3. The roll 14 can move upwards over a certain distance from the lowermost position of the roll 14 illustrated in fig 1, in which the knurled outer circumference of the roll 14 is located at some distance from the outer circumference of the roll 9 and lower than the axis of rotation of said roll 9. Said upward movement is limited because of the fact that at a given moment the outer circumference of the roll 14 bears against both the side wall 4 and the outer circumference of the roll 9 at a point under the axis of rotation of said roll 9.

As is indicated by chain-dotted lines in fig 1 a string may be led upwards from below between the rolls 14 and 9 and then be led downwards over the roll 9 and the side of the roll 9 remote from the roll 14 along the outer side of the side wall 5, so that the relevant string will have two parts 16 and 17 hanging down from the device. Said parts 16 and 17 extend downward from the device, which is e.g. suspended from a horizontally extending supporting wire located ± 3 metres above the ground. The bottom end of the string 17 is fixed in the ground surface, whilst the part 16 may join a remaining part of the string wound on a reel or the like.

The plant to be supported, e.g. a tomato plant, will be guided along the part 17 in the usual manner during its period of growth. Under the influence of the force exerted on the part 17 the string will be gripped tightly between the roll 9 and the roll 14 taken along by the string.

When it is desired to pay out the part 17 during the harvesting period the part 16 is pulled down a little from the position in which said part 16 is gripped between the rolls, after which the roll 14 will fall down.

Then said part 16 is moved upwards along the roll 9 until the part 17 has been paid out sufficiently. When the part 16 is then moved a little to the righthand side, seen in fig 1, said part will touch the roll 14 again and the roll 14 will be carried upwards by the part 16 in order to grip the part 16 tightly between the two rolls 9 and 14 again.

Manipulating the parts 16 and 17 can easily be done by a person standing on the ground, so that the paying out of the part 17 supporting the plant can be done simply and quickly.

During the beginning of the period of growth of the plant it may happen that the force exerted on the part 17 is insufficient for effecting the intended gripping operation between the rolls 14 and 9. In order to be able to secure the part 17 relative to the device yet, also during said period of growth, the device may furthermore be provided with a projecting hook 18 around which the part 16 can be wound a few times in order to secure the string. Towards the end of the first period of growth the part 16 can be freed from the hook 18 and during harvesting the device can be used in the manner described above.

The trailing part of the string may present problems when it hangs free.

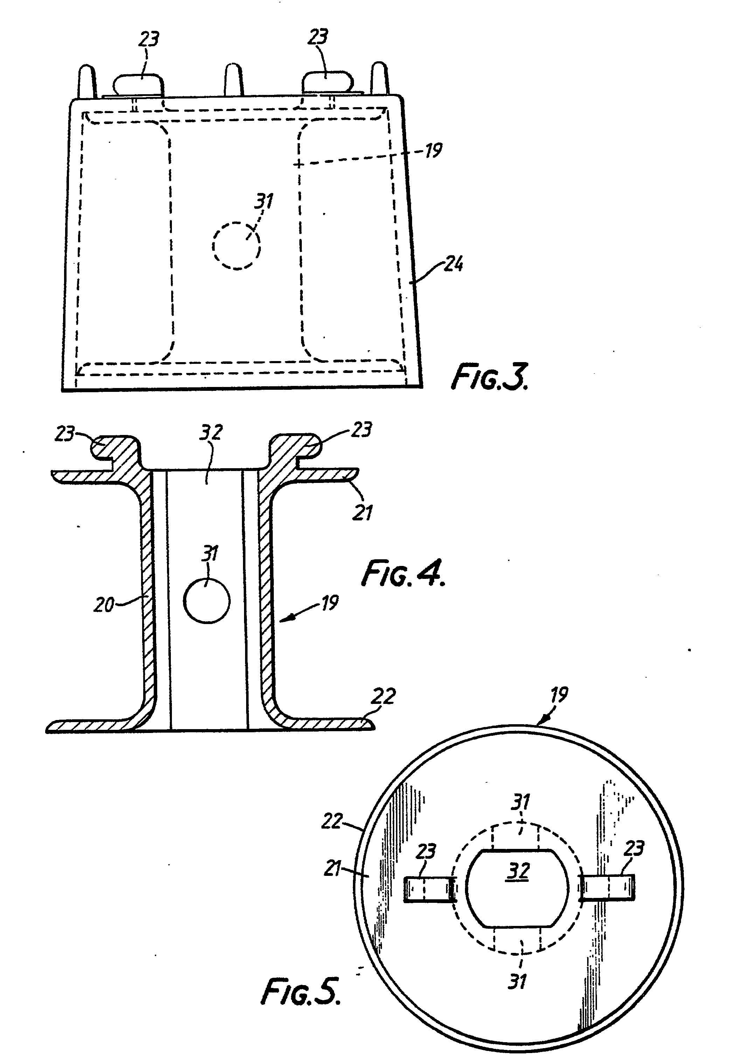

The figs 3 - 7 illustrate an efficient combination of a casing and a string reel for stowing away the part of the string that hangs free.

As appears in particular from the figs 4 and 5 the reel 19 has a hollow core 20, on whose ends flanges 21 and 22 are mounted. On the upper surface of the upper flange 21 there are mounted a pair of diametrically opposed L-shaped ears 23.

The construction is thereby such that the external diameter of the upper flange 21 is a little smaller than the external diameter of the lower flange 22.

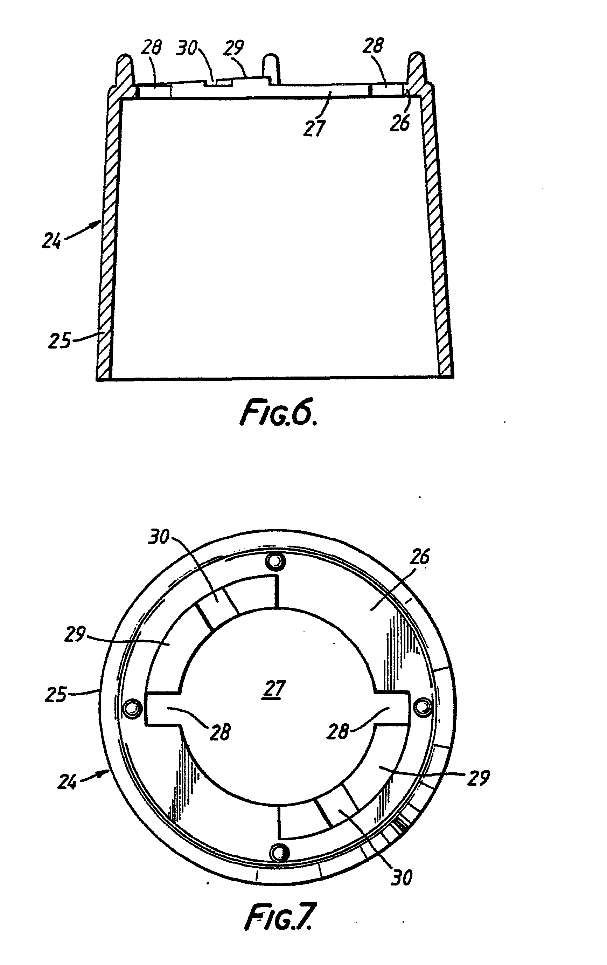

As appears in particular from fig 6 the casing 24 has a jacket 25 whose internal diameter gradually decreases from the open bottom side in the direction of the inwardly projecting flange 26 joining the upper edge of the casing 24.

The inner edge of the flange 26 defines a centrally arranged hole 27 which is in open communication with a pair of diametrically opposed notches 28 provided in the flange.

Joining one boundary edge of each notch is a rib 29 which is mounted on the flange, said rib extending concentrically from the relevant notch in a clockwise direction around the centre line of the casing 24 and gradually increasing in thickness thereby.

At some distance from the notches 28 there are provided recesses 30 in the upper surfaces of the ribs 29.

The loose part of the string can be wound around the core 20 of the reel between the flanges 21 and 22.

Then the reel can be slid into the casing, such that the ears 23 are pressed upwards through the recesses 28, after which the reel can be turned, as a result of which the ears 23 will be moved over the tapering ribs 29 in the direction of the recesses 30, into which the ears 23 will slip. The construction is thereby made such that the string part led outwards between the outer circumference of the flange 22 and the inner circumference of the jacket 25 and wound up on the reel joins the remaining part of the string, which is led through the device illustrated in figs 1 and 2 and gripped tightly there.

When it is desired to pay out the string the required string length can be pulled from the reel by pulling at the part protruding from the casing.

In order to wind a string on an empty reel 19 the end of the string can be inserted into a hole 31 provided in the core 20 so that said end of the string will lie in the through hole 32, having an unround section, in the core 20.

Then a correspondingly shaped part of a winding shaft can be inserted into the opening, as a result of which the end of the string is gripped tightly between the winding shaft and the core wall. Then the reel with the winding shaft can be rotated for winding up the string.

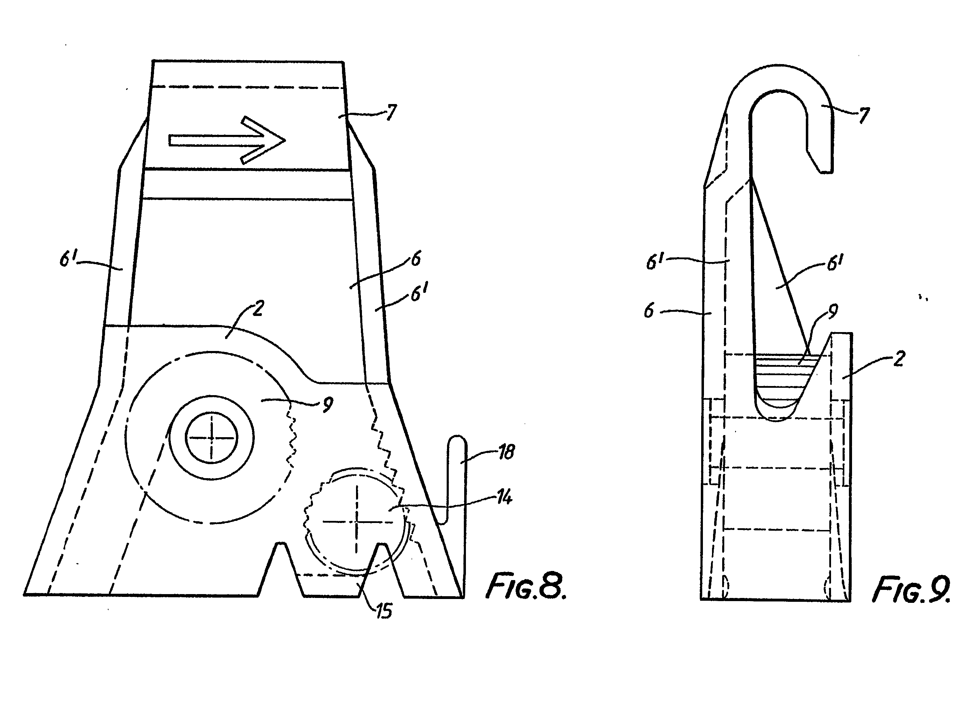

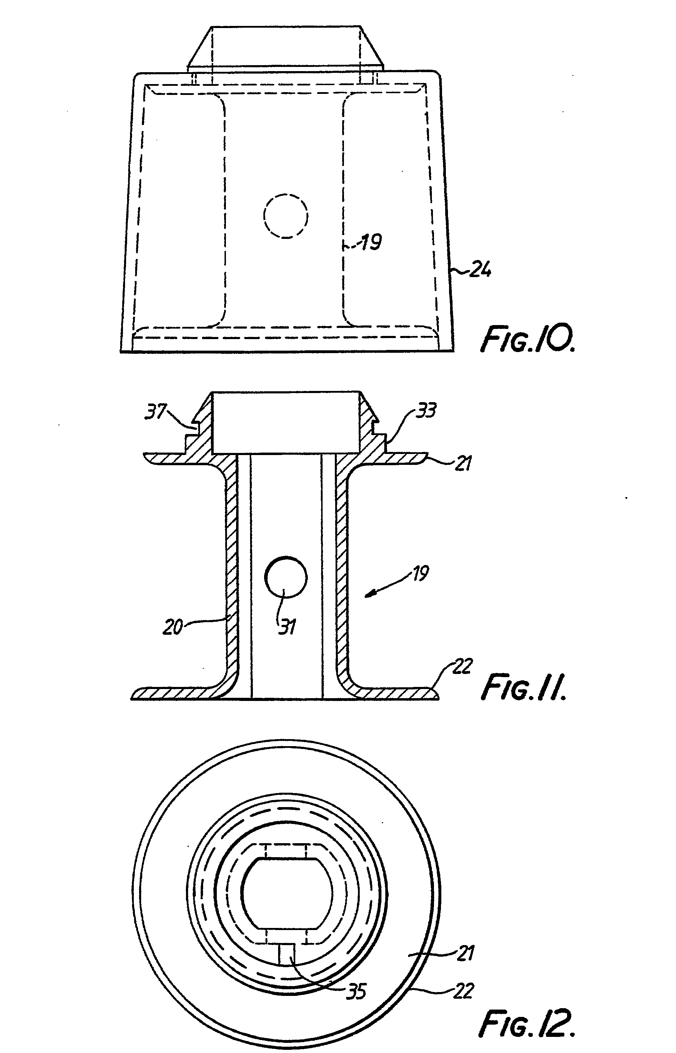

Thus figs 8 and 9 show a second embodiment of a device according to the invention, which at least substantially corresponds with the device illustrated in the figs 1 and 2. Those parts in fig 8 that correspond with the parts described above and illustrated in figs 1 and 2 are indicated by the same reference numbers as used in figs 1 and 2, therefore.

As will be apparent from figs 8 and 9 reinforcing ribs 6' are provided on upwardly extending edges of the extension piece 6. Furthermore the front wall 2, at the left-hand top side in fig 8, is constructed somewhat higher, so that the part 17 (not shown in fig 8) of the string will less easily slide off the upper side of the roll 9.

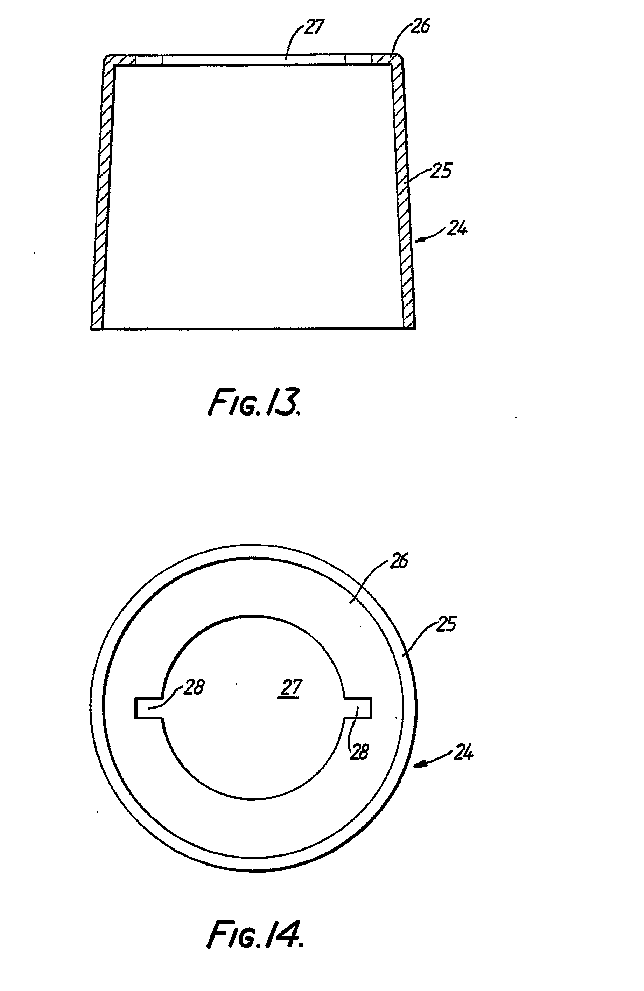

The reel illustrated in figs 11 and 12 at least substantially corresponds with the reel illustrated in the figs 4 and 5 and consequently corresponding parts are indicated by the same reference numbers in the various figures.

In the embodiment illustrated in the figs 11 and 12, however, an annular part 33 is provided on the upper side op the flange 21 instead of the ears 23, in which annular part there is formed an annular groove 34 at some distance above the flange 21. The diameter of the part of the annular means 33 located above the groove 34 gradually decreases in a direction remote from the flange 21, as will be apparent from fig 11.

Also in the figs 13 and 14 the same reference numbers as used in figs 6 and 7 are used for those parts that correspond with the parts of the casing illustrated in figs 6 and 7.

However, as will be apparent in particular from fig 13 the side of the flange 26 remote from the jacket 25 is constructed completely flat, in contrast to the embodiment according to the figs 6 and 7.

In this embodiment the reel can be put into the space surrounded by the jacket 25 and the tapering end of the annular means 33 can thereby be pressed through the hole 27, whereby the material of said tapering end is compressed a little in order to spring back again after having passed the flange 26, so that the inner edge of the flange will be retained in the groove 34 provided in the annular means 33.

As is furthermore illustrated in fig 12 a hole 35 is provided in the part of the flange 21 protruding from the core 20 and located inside the annular means 33 for checking the quantity of string wound around the core.

## Claims

1. Device for supporting a plant by means of a string (16, 17) attached to the device, whereby the device is provided with a supporting part (7) with which the device can be coupled to a horizontally extending wire, such that the device can be moved along the wire, whilst the device also comprises a first roll (9) rotatable relative to the supporting part (7) about an axis of rotation (10) having a fixed position relative to the supporting part (7), and means for fixing the string relative to the supporting part (7) characterized in that the device is provided with a casing (1) containing said means for fixing the string relative to the device, said means comprising the first roll (9) and a second roll (14) which is freely rotatable about an axis of rotation extending parallel to the axis of rotation of the first roll (9) and which is also movable up-and-down in the casing between a first position in which, seen in the normal operating position of the device, the second roll (14) is located at a distance from the first roll (9) and lower than the axis of rotation of the roll and a second position, in which the second roll (14) bears against a portion of the string located on the surface of the first roll (9) and against a boundary wall (4) of the casing (1), such that the second roll (14) is locked against a further upward movement.

2. Device according to claim 1, characterized in that the second roll (14) and the side of the boundary wall (4) directly towards the second roll (14) are provided with a knurled surface.

3. Device according to claims 1 or 2, characterized in that in the operating position the boundary wall (4) of the casing (1) which co-operates with second roll (14) slopes upwards from its lower edge in a direction towards the first roll (9).

4. Device according to any one of the preceding claims, characterized in that two rolls (9, 14) extend between a pair of opposed boundary walls (4, 5) of the casing which at their bottom ends are provided with stops (15) which hold up the second roll (14) in the casing.

5. Device according to any one of the preceding claims, characterized in that the first roll (9) is supported freely rotatably by means of pins (10) integral with said roll (9), said pins being journalled in holes (11, 12) provided in opposed walls (2, 3) of the casing (1), whilst in the facting sides of said walls (2, 3) having holes (11, 12) recesses (13) are provided, which extend upwards from the lower boundary edges of said walls (2, 3) in the direction of the holes (11, 12), the depth of said recesses (13) gradually decreasing from the lower edges of the boundary walls (2, 3) in the direction of the holes (11, 12).

6. Device according to any one of the preceding claims, characterized in that the device is provided with a projection (18) around which the string can be wound.

7. Device according to any one of the preceding claims, characterized in that the part (16) of the string hanging free from the device is wound on a reel (19) which is accomodated in a casing (24).

8. Device according to claim 7, characterized in that the reel (19) is provided with a core part (20) and flanges (21, 22) provided on the ends thereof, whereby the one flange (22) has a larger diameter than the other flange (21), whilst the room in the casing (24) accomodating the reel (19) is constructed correspondingly conically.

9. Device according to any one of the claims 7 or 8, characterized in that the core part (20) is provided with a through passage having an unround section, said passage being in communication with a hole (31) in the wall of the core part (20).

10. Device according to any one of the claims 7 – 9, characterized in that the smaller flange (21) of the reel (19) is provided with projecting ears (23) which may be led through recesses (30) in a wall bounding the casing (24) at one end, said wall being provided with wedge-shaped ribs (29) at the side remote from the room accomodating the reel (19), along which ribs (29) the ears (23) can be led in the direction of recess (30) formed in the rib (29) for taking up the ears (23).

11. Device according to any one of the claims 7 – 9, characterized in that the smaller flange (21) of the reel (19) is provided with a projecting annular part, the diameter of whose upper end gradually decreases in a direction remote from the flange (21) of the reel (19), and that a circular groove (37) is provided in the annular part for taking up the inner boundary edge of an opening (27) provided in a wall bounding the casing (24) at one end.

## Patentansprüche

1. Vorrichtung zum Stützen einer Pflanze mittels einer an der Vorrichtung befestigten Schnur (16, 17), wobei die Vorrichtung mit einem Stützteil (7) versehen ist, mit dessen Hilfe sie mit einem horizontal verlaufenden Draht verbunden werden kann, so daß die Vorrichtung längs des Drahts bewegt werden kann, während die Vorrichtung auch eine erste, bezüglich des Trägerteils (7) um eine Drehachse mit einer bezüglich des Trägerteils (7) festen Position drehbare Rolle (9) sowie ein Mittel zum Befestigen der Schnur bezüglich des Trägerteils (7) aufweist, dadurch gekennzeichnet, daß die Vorrichtung mit einem Gehäuse (1) versehen ist, das das Mittel zum Befestigen der Schnur bezüglich der Vorrichtung enthält, wobei das Mittel die erste Rolle und eine zweite Rolle (14) enthält, die frei um eine Drehachse drehbar ist, die sich parallel zur Drehachse der ersten Rolle (9) erstreckt und die auch in dem Gehäuse zwischen einer ersten Position, in der sich die zweite Rolle (14), gesehen in der normalen Betriebsposition der Vorrichtung, im Abstand von der ersten Rolle (9) und niedreger als die Drehachse der ersten Rolle befindet, und einer zweiten Position, in der die zweite Rolle (14) gegen einen Teil der Schnur auf der Fläche der ersten Rolle (9) und gegen eine Begrenzungswand (4) des Gehäuses (1) drückt, so daß die zweite Rolle (14) egen eine weitere Bewegung nach oben gesperrt ist, auf und ab beweglich ist.

2. Vorrichtung nach Anspruch 1, dadurch gekennzeichnet, daß die zweite Rolle (14) und die Seite der Begrenzungswand (4), die direkt gegen die zweite Rolle (14) gerichtet ist, mit einer gerändelten Oberfläche versehen ist.

3. Vorrichtung nach Ansprucn 1 oder 2, dadurch gekennzeichnet, daß in der Arbeitsposition die Begrenzungswand (4) des Gehäuses (1), die mit der zweiten Rolle zusammenarbeitet, vom unteren Rand aus in Richtung zu der ersten Rolle (9) schräg nach oben verläuft.

4. Vorrichtung nach einem der vorhergehenden Ansprüche, dadurch gekennzeichnet, daß die zwei Rollen (9, 14) zwischen zwei gegenüberliegenden Begrenzungswänden (4, 5) des Gehäuses verlaufen, die an ihren unteren Enden mit Anschlägen (15) versehen sind, die die zweite Rolle (14) in dem Gehäuse (1) halten.

5. Vorrichtung nach einem der vorhergehenden Ansprüche, dadurch gekennzeichnet, daß die erste Rolle (9) mit Hilfe von einstückig mit der Rolle (9) verbundenen Stiften (10) frei drehbar gehalten ist, wobei die Stifte (10) in Löchern (11, 12) in gegenüberliegenden Wänden (2, 3) des Gehäuses (1) gelagert sind, während in den Stirnseiten der die Löcher (11, 12) aufweisenden Wände (2, 3) Ausnehmungen (13) gebildet sind, die sich von den unteren Rändern der Wände (2, 3) in Richtung der Löcher (11, 12) nach oben erstrecken, wobei die Tiefe der Ausnahmungen (13) von den Unterkanten der Begrenzungswände (23) in der Richtung der Löcher (11, 12) allmählich abnimmt.

6. Vorrichtung nach einem der vorhergehenden Ansprüche, dadurch gekennzeichnet, daß die Vorrichtung mit einem Vorsprung (18) versehen ist, um den Schnur gewickelt werden kann.

7. Vorrichtung nach einem der vorhergehenden Ansprüche, dadurch gekennzeichnet, daß der Teil (16) der Schnur, der frei von der Vorrichtung herabhängt, um eine Rolle (19) gewickelt ist, die in einem Gehäuse (24) untergebracht ist.

8. Vorrichtung nach Anspruch 7, dadurch gekennzeichnet, daß die Rolle (19) mit einem Kernteil (20) und mit Flanschen (21, 22) an dessen Enden versehen ist, wobei einer der Flansche (22) einen größeren Durchmesser als der andere Flansch (21) hat, während der die Rolle (19) in dem Gehäuse (24) aufnehmende Raum entsprechend konisch aufgebaut ist.

9. Vorrichtung nach einem der Ansprüche 7 oder 8, dadurch gekennzeichnet, daß der Kernteil (20) mit einer Durchführung mit einem unrunden Querschnitt versehen ist, die mit einem Loch (31) in der Wand des Kernteils (20) in Verbindung steht.

10. Vorrichtung nach einem der Ansprüche 7 bis 9, dadurch gekennzeichnet, daß der kleinere Flansch (21) der Rolle (19) mit vorstehenden Laschen (23) versehen ist, die durch Ausnahmungen (30) in einer das Gehäuse (24) an einem Ende begrenzenden Wand geführt werden können, wobei die Wand mit keilförmigen Rippen (24) an der Seite versehen ist, die von dem die Rolle (19) aufnehmenden Raum abgewandt ist, wobei die Laschen (23) längs Rippen (29) in der Richtung von Ausnehmungen (30) geführt werden können, die in den Rippen (29) zum Erfassen der Laschen (23) gebildet sind.

11. Vorrichtung nach einem der Ansprüche 7 bis 9, dadurch gekennzeichnet, daß der kleinere Flansch (21) der Rolle (19) mit einem vorstehenden Ringteil versehen ist, bei dem der Durchmesser des oberen Endes in einer vom Flansch (21) der Rolle (19) wegführenden Richtung allmählich abnimmt, und daß in dem Ringteil eine kreisförmige Nut (37) vorgesehen ist, die die innere Begrenzungskante einer Öffnung (27) aufnimmt, die in einer das Gehäuse (24) an einem Ende begrenzenden Wand angebracht ist.

## Revendications

1. Dispositif de support d'une plante au moyen d'une ficelle (16, 17) fixée sur le dispositif, ce dernier·étant muni d'une partie de support (7) avec laquelle il peut être raccordé à un fil s'étendant horizontalement, de telle sorte que celui-ci peut être déplacé le long de ce fil, tandis qu'il peut également comprendre un premier rouleau (9) rotatif par rapport à la partie de support (7) autour d'un axe de rotation (10) ayant une position fixe par rapport à la partie de support (7) et des moyens destinés à fixer la ficelle par rapport à la partie de support (7), dispositif caractérisé en ce qu'il est muni d'un caisson contenant les moyens destinés à fixer la ficelle par rapport au dispositif, ces moyens comprenant un premier rouleau et un second rouleau (14) librement mobiles autour d'un axe de rotation s'étendant parallèlement à l'axe de rotation du premier rouleau (9) et qui est également mobile vers le haut et vers le bas dans le caisson entre une première position dans laquelle, vu dans la position normale de fonctionnement du dispositif, le second rouleau (14) est situé à une certaine distance à partir du premier rouleau (9) et au-dessous de l'axe de rotation du premier rouleau et une seconde position dans laquelle le second rouleau (14) vient en appui contre une portion de la ficelle située sur la surface du premier rouleau (9) et contre une paroi limite (4) du caisson (1) de telle sorte que le second rouleau (14) est bloqué pour l'empêcher de poursuivre son mouvement vers le haut.

2. Dispositif selon la revendication 1, caractérisé en ce que le second rouleau (14) et le côté de la paroi limite (4) directement en direction du second rouleau (14) sont munis d'une surface moletée.

3. Dispositif selon la revendication 1 ou 2, caractérisé en ce que dans la position de fonctionnement la paroi limite (4) du caisson (1) qui coopère avec le second rouleau présente une inclinaison vers le haut à partir de son bord inférieur dans une direction vers le premier rouleau (9).

4. Dispositif selon l'une quelconque des revendications précédentes, caractérisé en ce que les deux rouleaux (9, 14) s'étendent entre une paire de parois limites opposées (4, 5) du caisson, lesquelles, sur leurs extrémités inférieures, sont munies de butées (15) qui tiennent le second rouleau (14) dans le caisson (1).

5. Dispositif selon l'une quelconque des revendications précédentes, caractérisé en ce que le premier rouleau (9) est supporté librement de façon rotative au moyen d'axes (10) solidaires du rouleau (9), ces axes (10) étant montés dans des trous (11, 12) pratiqués dans les parois opposées (2, 3) du caisson tandis que dans les côtés opposés des parois (2, 3) comportant les trous (11, 12) sont prévus les évidements (13) qui s'étendent vers le haut à partir des bords limites inférieurs des parois (2, 3) dans la direction des trous (11, 12), la profondeur des évidements (13) diminuant progressivement à partir des bords inférieurs des parois limites (23) dans la direction des trous (11, 12).

6. Dispositif selon l'une quelconque des revendications précédentes, caractérisé en ce qu'il est muni d'une saillie (18) autour de laquelle on peut enrouler la ficelle.

7. Dispositif selon l'une quelconque des revendications précédentes, caractérisé en ce que la partie (16) de la ficelle pendant librement à partir du dispositif est enroulée sur une bobine (19) qui est logée dans un caisson (24).

8. Dispositif selon la revendication 7, caractérisé en ce que la bobine (19) est munie d'une partie de noyau (20) et de collerettes (21, 22) montées sur ses extrémités, de telle manière qu'une collerette (22) présente un diamètre plus grand que l'autre collerette (21) tandis que le volume à l'intérieur du caisson (24) servant à loger la bobine est de façon correspondante conçu en forme de cône.

9. Dispositif selon la revendication 7 ou 8, caractérisé en ce que la partie de noyau (20) est munie d'un passage traversant ayant une section non ronde, le passage étant en communication avec un trou (31) dans une paroi de la partie de noyau (20).

10. Dispositif selon l'une quelconque des revendications 7 à 9, caractérisé en ce que la plus petite collerette (21) de la bobine (19) est munie d'oeillets (23) faisant saillie et qui peuvent être amenés à travers les évidements (30) dans une paroi limitrophe du caisson (24) sur une extrémité, cette paroi étant munie de nervures en forme de coins (24) sur le côté éloigné par rapport à l'espace recevant la bobine (19), les oeillets (23) pouvant être amenés le long des nervures (29) dans la direction des évidements (30) formés dans la nervure (29) pour recevoir les oeillets.

11. Dispositif selon l'une quelconque des revendications 7 à 9, caractérisé en ce que la plus petite collerette (21) de la bobine (19) est munie d'une partie annulaire faisant saillie, le diamètre de l'extrémité supérieure de laquelle diminue progressivement dans une direction éloignée par rapport à la collerette (21) de la bobine (19), et en ce qu'une rainure circulaire (37) est prévue dans la partie annulaire pour recevoir le bord limite intérieur d'une ouverture (27) pratiquée dans une paroi limitrophe du caisson (24) sur une extrémité.

*FIG.1.*

*FIG.2.*

EP 0 273 491 B1

**FIG.3.**

**FIG.4.**

**FIG.5.**

*Fig.6.*

*Fig.7.*

Fig.9.

Fig.8.

*FIG.10.*

*FIG.11.*

*FIG.12.*

*FIG. 13.*

*FIG. 14.*